# FASCICULE DE BREVET EUROPEEN

(11) **EP 2 454 112 B1**
(45) Date de publication et mention de la délivrance du brevet: **01.05.2013**
(21) Numéro de dépôt: 10745351.6
(22) Date de dépôt: 28.06.2010
(51) Int. Cl.: B60K 1/04, B60R 16/04, H01M 2/10, H01M 2/12, H01M 10/50

(54) **VEHICULE AUTOMOBILE COMPORTANT UN MOTEUR ELECTRIQUE ALIMENTE PAR UN MODULE D'ALIMENTATION**
AUTOMOBIL MIT ELEKTROMOTOR, DER VON EINEM STROMVERSORGUNGSMODUL BETRIEBEN WIRD
AUTOMOBILE COMPRISING AN ELECTRIC MOTOR POWERED BY A POWER SUPPLY MODULE

(30) Priorité: 17.07.2009 FR 0954996
(43) Date de publication de la demande: 23.05.2012
(73) Titulaire: Peugeot Citroën Automobiles SA, 78140 Vélizy Villacoublay (FR)
(72) Inventeur: HUREAUX, Sébastien, F-70200 Magny D'anigon (FR); BERGER, Flavien, F-25630 Sainte Suzanne (FR); ALPY, Eric, F-25460 Etupes (FR); SPEHNER, Maxime, F-25630 Sainte Suzanne (FR); LUC, Benoît, F-25260 Saint Maurice Colombier (FR)
(74) Mandataire: Fernandez, Francis Lionel
(86) Numéro de dépôt international: PCT/FR2010/051336
(87) Numéro de publication internationale: WO 2011/007072

(56) Documents cités:
- DE-A1- 19 848 646
- JP-A- 10 252 467
- US-A1- 2008 196 957
- US-A1- 2009 152 031

## Description

La présente invention concerne un véhicule automobile comportant un moteur électrique alimenté par un module d'alimentation, et une structure comportant un plancher délimitant la partie inférieure de l'habitacle du véhicule.

Classiquement, un conduit d'extraction est relié au module d'alimentation, il permet d'évacuer l'air chaud produit par le module lors de son fonctionnement.

En effet, il est nécessaire d'évacuer l'air chaud produit par le module d'alimentation, par exemple par une batterie, afin d'assurer son bon fonctionnement. Si cet air chaud n'est pas évacué, le module d'alimentation et ses différents composants risquent de s'endommager, au risque d'entraîner la casse de ces derniers

De plus, cet air chaud, s'il n'est pas évacué, risque de perturber le confort des passagers.

Il est donc nécessaire de prévoir une évacuation de cet air chaud.

Comme le montre le document US2008/0196957, l'extrémité libre du conduit d'extraction peut être localisée entre la peau extérieure du véhicule et un panneau de garniture du coffre.

Toutefois, une telle localisation impose d'adapter la peau extérieure du véhicule et/ou ses différentes doublures, ce qui engendre un surcout lorsque ces pièces doivent être communes à des véhicules possédant des propulsions thermiques, électriques et/ou hybrides.

Un véhicule automobile comprenant les caractéristiques du préambule la revendication est connu du document US 2009/0152031.

L'invention a pour but de palier à cet inconvénient en proposant une implantation qui évite les problèmes mentionnés ci-dessous, tout en assurant une évacuation convenable de la température.

L'invention a donc pour objet un véhicule automobile comportant un moteur électrique alimenté par un module d'alimentation auquel est relié un conduit d'extraction de l'air chaud produit par ledit module, et une structure comportant un plancher délimitant la partie inférieure de l'habitacle du véhicule, une des extrémités dudit conduit d'extraction débouchant au niveau d'un orifice réalisé dans le plancher du véhicule, l'orifice peut étant situé entre une pièce de fermeture reliant la traverse au passage de roue et un longeronnet s'étendant entre le passage de roue et le module d'alimentation.

Suivant des modes particuliers de réalisation de l'invention, le véhicule comporte une ou plusieurs des caractéristiques suivantes, prise(s) isolément ou suivant toutes les combinaisons techniquement possibles :
- l'extrémité du conduit d'extraction peut être fixée à l'orifice à l'aide d'une embase, l'orifice et l'embase possédant des formes complémentaires ;
- le pourtour de l'orifice peut comporter une nervure afin d'assurer l'étanchéité entre le bord de l'orifice et l'embase ;
- un joint peut être disposé entre le bord de l'orifice et la nervure ;
- l'orifice peut être situé entre une traverse délimitant la partie arrière du coffre du véhicule et un passage de roue délimitant une partie du logement recevant la partie supérieure d'une roue ;
- l'orifice peut être situé entre une pièce fixée au plancher, s'étendant sensiblement selon la direction verticale, et un longeronnet supportant la tôle formant la surface du plancher ;
- un pulseur, destiné à accélérer l'évacuation de l'air chaud, peut être disposé en amont de l'extrémité du conduit d'extraction et en aval du module d'alimentation ;
- le module d'alimentation peut comprendre une batterie.

Les caractéristiques et avantages de l'invention apparaîtront au cours de la description qui va suivre, donnée à titre d'exemple et faite en référence aux dessins annexés, sur lesquels :
- la figure 1 est une vue schématique en perspective d'une partie arrière de véhicule automobile sur laquelle est installée une batterie ;
- la figure 2 est une vue schématique en perspective d'une zone de la partie arrière représentée à la figure 1, au niveau de laquelle est située une évacuation de l'air chaud de la batterie ; et

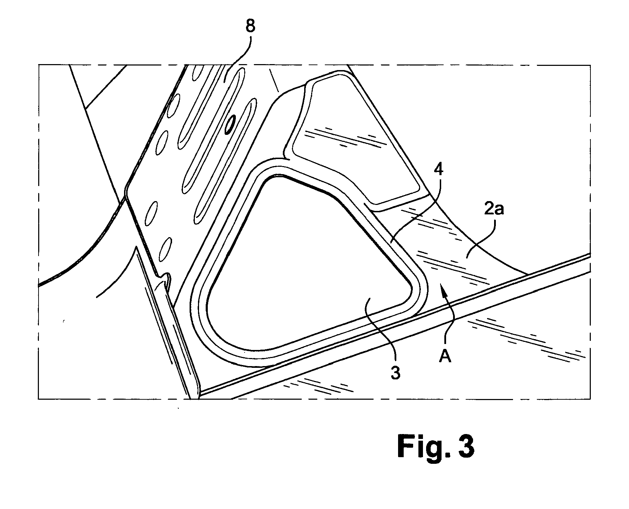

- la figure 3 est une vue de la partie du plancher représentée à la figure 2 dépourvue du système d'évacuation de l'air chaud.

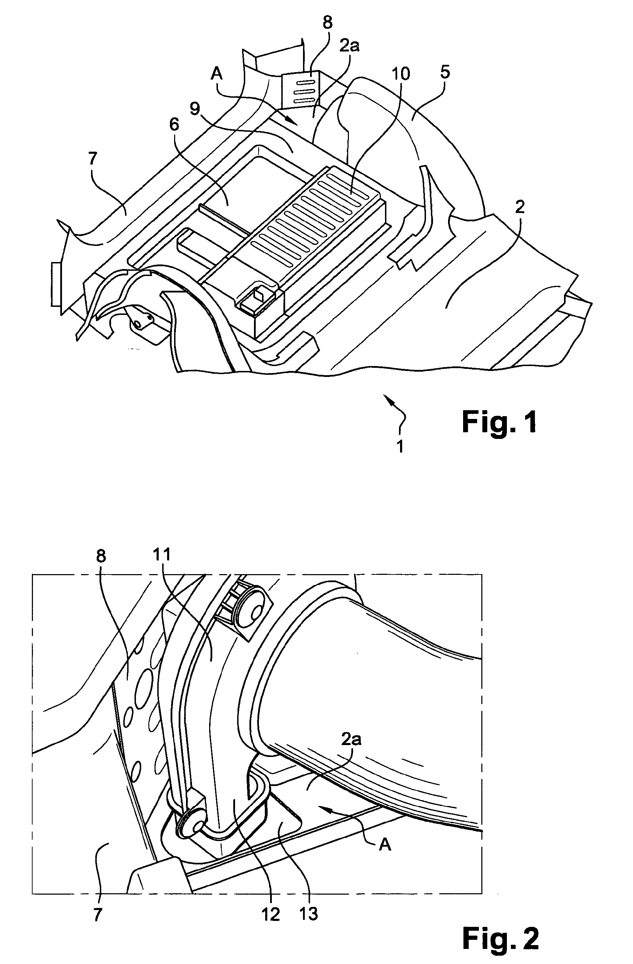

Sur la figure 1, on a représenté une partie de structure 1 de véhicule, ce véhicule comportant un moteur électrique alimenté par un module d'alimentation 10.

De manière connue, la structure 1 comporte au moins un plancher, délimitant la partie inférieure de l'habitacle du véhicule, qui porte des éléments destinés à l'aménagement de l'intérieur du véhicule. Sur la figure 1, seule la partie arrière 2 du plancher est représentée.

Le plancher est réalisé de manière classique par l'assemblage de tôles formées par emboutissage et assemblées entre elles par soudure. Le plancher comporte en outre des éléments de structure tels que des longeronnets et des traverses, non représentés, supportant la tôle formant la surface du plancher ; et notamment la tôle 9 formant le plancher de charge située au niveau du coffre 6 du véhicule.

La partie arrière du véhicule, représentée à la figure 1, comprend un coffre 6 délimité, à sa partie supérieure, par un panneau de coffre, non représenté, à sa partie arrière, par une traverse 7 et, à sa partie inférieure, par le plancher de charge 9.

Par la suite, seule la partie gauche du véhicule, comportant la zone de l'invention, sera décrite ; la partie droite correspondant à un agencement classique.

Comme montré à la figure 1, un passage de roue 5 s'étendant sensiblement selon la direction verticale est soudé notamment au plancher de charge 9 ainsi qu'à un longeronnet disposé à proximité. Le passage de roue 5 est fixé dans sa partie supérieure à la peau extérieure du véhicule, non représentée, par l'intermédiaire de pièces de structure, non représentés, de manière à délimiter un logement recevant la partie supérieure de la roue.

Une pièce de fermeture 8, s'étendant sensiblement selon la direction verticale, est soudée au plancher de charge 9 et relie la traverse 7 au passage de roue 5 de manière à délimiter une zone A comprise entre la traverse 7, la pièce de fermeture 8, le passage de roue 5 et, dans sa partie inférieure, par une partie 2a du plancher de charge 9 délimitée par un longeronnet, non représenté, s'étendant entre le passage de roue 5 et le module d'alimentation 10.

Le module d'alimentation 10 est fixé au niveau du plancher de charge 9, au niveau du coffre 6 du véhicule, derrière la deuxième rangée de sièges. Sa fixation est réalisée sur des traverses et/ou longeronnets disposés à proximité.

Le module d'alimentation 10 peut inclure tout dispositif destiné à amener de l'énergie et/ou de la puissance au moteur électrique. Ce dispositif peut par exemple comprendre des éléments unitaires, tels que des batteries au plomb, des cellules Li-ion, se présentant sous forme prismatique, cylindrique, de sachet souple ... et reliés entre eux par des circuits électriques. Le module d'alimentation 10 comprend en outre un bac et un couvercle destinés à recevoir et à protéger le dispositif amenant de l'énergie et/ou de la puissance, et formant un lieu de stockage rigide. Dans l'exemple représenté à la figure 1, le module d'alimentation 10 est une batterie.

L'extraction de l'air chaud de la batterie 10 est réalisée par l'intermédiaire d'un conduit 11 dont l'extrémité 12 achemine l'air vers l'extérieur du véhicule. En amont de l'extrémité 12 et en aval de la batterie 10, se trouve un pulseur, non représenté, destiné à accélérer l'évacuation de l'air chaud.

Selon l'invention, l'extrémité 12 débouche au niveau d'un orifice 3 réalisé dans le plancher 2 du véhicule. La fixation de l'extrémité 12 est réalisée grâce à une embase 13 solidaire de l'extrémité 12. L'orifice 3 et l'embase 13 possèdent des formes complémentaires de manière à ce que la fixation de l'embase 13 sur l'orifice 3 soit réalisée de façon étanche. Selon le mode de réalisation représenté, l'orifice 3 et l'embase 13 possèdent sensiblement une forme triangulaire.

Plus particulièrement, l'orifice 3 est réalisé dans la partie 2a du plancher de charge 9 située dans la zone A décrite ci-dessus. Ainsi, l'orifice 3 est situé entre la traverse 7 et le passage de roue 5 et entre la pièce de fermeture 8 et le longeronnet s'étendant entre le passage de roue 5 et le module d'alimentation 10.

De préférence, une nervure 4 est réalisée sur le pourtour de l'orifice 3 à une distance comprise de préférence entre 5 et 20 mm du bord de l'orifice 3. Cette nervure 4 est réalisée par emboutissage et prend la forme d'un bourrelet.

Cette nervure 4 est destinée à améliorer l'étanchéité entre le bord de l'orifice 3 et l'embase 13 de manière à éviter les bruits dus aux fuites d'air chaud arrivant du conduit 11 et aux remontées d'air pouvant se réaliser entre ces pièces à certaines vitesses de roulage du véhicule.

De plus, cette nervure 4 permet d'éviter l'infiltration d'humidité ou de salissures.

De préférence, un joint, non représenté, est disposé entre le bord de l'orifice 3 et la nervure 4.

Avantageusement, un garnissage non représenté, masque le conduit 11 et le système d'évacuation de l'air chaud décrit ci-dessus, c'est-à-dire notamment l'embase 13 et l'orifice 3. Ainsi, le pulseur, le conduit 11 et le système d'évacuation de l'air chaud sont disposés entre le panneau extérieur du véhicule et le garnissage de manière à être masqué et sont donc non visible par l'utilisateur du véhicule.

Ainsi, grâce au système d'évacuation de l'air chaud décrit ci-dessus, la peau extérieure du véhicule et ses différentes doublures n'ont pas besoin d'être aménagées et restent identiques que le véhicule, issu de la structure décrite ci-dessus, soit à propulsion thermique, hybride ou électrique. Seule une découpe et un embouti, afin de réaliser la nervure, seront réalisés dans le plancher, pour les véhicules le nécessitant. Ces opérations entrainent une modification simple et peu couteuse des outillages utilisés pour produire le plancher 2.

De plus, la localisation de cette implantation limite pour les passagers les nuisances sonores dues au fonctionnement du pulseur.

Bien évidemment, l'invention n'est pas limitée au mode de réalisation décrit ci-dessus. Ainsi, l'extrémité du conduit d'extraction de l'air chaud peut déboucher à d'autres endroits appropriés du plancher.

## Revendications

1. Véhicule automobile comportant un moteur électrique alimenté par un module d'alimentation (10) auquel est relié un conduit d'extraction (11) de l'air chaud produit par ledit module, et une structure comportant un plancher (2) délimitant la partie inférieure de l'habitacle du véhicule, une des extrémités (12) dudit conduit d'extraction (11) débouchant au niveau d'un orifice (3) réalisé dans le plancher (2) du véhicule, **caractérisé en ce que** l'orifice (3) est situé entre une traverse (7) délimitant la partie arrière du coffre du véhicule et un passage de roue (5) délimitant une partie du logement recevant la partie supérieure d'une roue.

2. Véhicule selon la revendication 1, **caractérisé en ce que** l'extrémité (12) du conduit d'extraction (11) est fixée à l'orifice (3) à l'aide d'une embase (13), l'orifice (3) et l'embase (13) possédant des formes complémentaires.

3. Véhicule selon la revendication 2, **caractérisé en ce que** le pourtour de l'orifice (3) comporte une nervure (4) afin d'assurer l'étanchéité entre le bord de l'orifice (3) et l'embase (13).

4. Véhicule selon la revendication 3, **caractérisé en ce qu'**un joint est disposé entre le bord de l'orifice (3) et la nervure (4).

5. Véhicule selon l'une quelconque des revendications précédentes, **caractérisé en ce que** l'orifice (3) est situé entre une pièce (8) fixée au plancher, s'étendant sensiblement selon la direction verticale, et un longeronnet supportant la tôle formant la surface du plancher (2).

6. Véhicule selon la revendication 5, **caractérisé en ce que** l'orifice (3) est situé entre une pièce (8) de fermeture reliant la traverse (7) au passage de roue (5) et un longeronnet s'étendant entre le passage de roue (5) et le module d'alimentation (10).

7. Véhicule selon l'une quelconque des revendications précédentes, **caractérisé en ce qu'**un pulseur, destiné à accélérer l'évacuation de l'air chaud, est disposé en amont de l'extrémité (12) du conduit d'extraction (11) et en aval du module d'alimentation (10).

8. Véhicule selon l'une quelconque des revendications précédentes, **caractérisé en ce que** le module d'alimentation comprend une batterie (10).

## Claims

1. A motor vehicle comprising an electric motor powered by a supply module (10), to which there is connected an exhaust duct (11) of the hot air produced by the said module, and a structure comprising a floor (2) delimiting the lower part of the passenger compartment of the vehicle, one of the ends (12) of the said exhaust duct (11) opening out at the level of an opening (3) formed in the floor (2) of the vehicle, **characterized in that** the opening (3) is situated between a crossbeam (7) delimiting the rear part of the boot of the vehicle and a wheel arch (5) delimiting a part of the housing receiving the upper part of a wheel.

2. The vehicle according to Claim 1, **characterized in that** the end (12) of the exhaust duct (11) is fixed to the opening (3) by means of a flange (13), the opening (3) and the flange (13) having complementary shapes.

3. The vehicle according to Claim 2, **characterized in that** the periphery of the opening (3) comprises a rib (4) so as to ensure the tightness between the edge of the opening (3) and the flange (13).

4. The vehicle according to Claim 3, **characterized in that** a seal is arranged between the edge of the opening (3) and the rib (4).

5. The vehicle according to any one of the preceding claims, **characterized in that** the opening (3) is situated between a part (8) which is fixed to the floor, extending substantially along the vertical direction, and a small side rail supporting the sheet metal forming the surface of the floor (2).

6. The vehicle according to Claim 5, **characterized in that** the opening (3) is situated between a closure part (8) connecting the crossbeam (7) to the wheel arch (5) and a small side rail extending between the wheel arch (5) and the supply module (10).

7. The vehicle according to any one of the preceding claims, **characterized in that** a blower, intended to accelerate the evacuation of the hot air, is arranged upstream of the end (12) of the exhaust duct (11) and downstream of the supply module (10).

8. The vehicle according to any one of the preceding claims, **characterized in that** the supply module includes a battery (10).

## Patentansprüche

1. Automobil, das einen Elektromotor aufweist, der von einem Versorgungsmodul (10) versorgt wird, mit dem eine Extraktionsleitung (11) der Warmluft, die von dem Modul erzeugt wird, verbunden ist, und eine Struktur, die einen Boden (2) aufweist, der den unteren Teil der Fahrgastzelle des Automobils abgrenzt, wobei eines der Enden (12) der Extraktionsleitung (11) auf dem Niveau einer Öffnung (3) mündet, die in dem Fußboden (2) des Automobils hergestellt ist, **dadurch gekennzeichnet, dass** die Öffnung (3) zwischen einem Querbalken (7), der den hinteren Teil des Kofferraums des Automobils abgrenzt, und einem Radlauf (5), der einen Teil der Aufnahme abgrenzt, die den oberen Teil eines Rads aufnimmt, liegt.

2. Automobil nach Anspruch 1, **dadurch gekennzeichnet, dass** das Ende (12) der Extraktionsleitung (11) an der Öffnung (3) mit Hilfe eines Sockels (13) befestigt ist, wobei die Öffnung (3) und der Sockel (13) komplementäre Formen aufweisen.

3. Automobil nach Anspruch 2, **dadurch gekennzeichnet, dass** der Umfang der Öffnung (3) eine Rippe (4) aufweist, um die Abdichtung zwischen dem Rand der Öffnung (3) und dem Sockel (13) sicherzustellen.

4. Automobil nach Anspruch 3, **dadurch gekennzeichnet, dass** eine Dichtung zwischen dem Rand der Öffnung (3) und der Rippe (4) angeordnet ist.

5. Automobil nach einem der vorhergehenden Ansprüche, **dadurch gekennzeichnet, dass** die Öffnung (3) zwischen einem Teil (8), der an dem Fußboden befestigt ist, der sich im Wesentlichen entlang der vertikalen Richtung erstreckt, und einem kleinen Längsträger, der das Blech trägt, das die Oberfläche des Bodens (2) bildet, liegt.

6. Automobil nach Anspruch 5, **dadurch gekennzeichnet, dass** die Öffnung (3) zwischen einem Verschlussteil (8), der den Querträger (7) mit dem Radlauf (5) verbindet, und einem kleinen Längsträger, der sich zwischen dem Radlauf (5) und dem Versorgungsmodul (10) erstreckt, liegt.

7. Automobil nach einem der vorhergehenden Ansprüche, **dadurch gekennzeichnet, dass** ein Gebläse, das dazu bestimmt ist, die Ableitung der Warmluft zu beschleunigen, stromaufwärts des Endes (12) der Extraktionsleitung (11) und stromabwärts des Versorgungsmoduls (10) angeordnet ist.

8. Automobil nach einem der vorhergehenden Ansprüche, **dadurch gekennzeichnet, dass** das Versorgungsmodul eine Batterie (10) aufweist.
